# EUROPEAN PATENT APPLICATION

(11) **EP 3 567 136 A1**
(43) Date of publication of application: **13.11.2019**
(21) Application number: 17889032.3
(22) Date of filing: 27.12.2017
(51) Int. Cl.: C25B 11/08, C02F 1/46, C25B 1/26, C25B 9/00, E03D 9/08

(54) **ELECTROLYZED WATER PRODUCTION DEVICE**

(30) Priority: 28.12.2016 JP 2016254719
(71) Applicant: De Nora Permelec Ltd, Fujisawa-shi, Kanagawa 252-0816 (JP)
(72) Inventor: HARA, Tomohiro, Kitakyushu-shi Fukuoka 802-8601 (JP); AMEMORI, Hiroaki, Kitakyushu-shi Fukuoka 802-8601 (JP); NAKANO, Yusuke, Fujisawa-shi Kanagawa 252-0816 (JP)
(74) Representative: AWA Sweden AB
(86) International application number: PCT/JP2017/046950
(87) International publication number: WO 2018/124195

(57) **Abstract**

An electrolyzed water production device produces electrolyzed water including hypochlorous acid by electrolyzing water including chloride ions, and includes an electrolytic cell through which water passes, and an electrode provided inside the electrolytic cell; and the electrode includes a catalyst layer including iridium oxide, tantalum oxide, and rhodium oxide, in which a proportion of a number of rhodium atoms included in the rhodium oxide to a sum of a number of iridium atoms included in the iridium oxide, a number of tantalum atoms included in the tantalum oxide, and the number of rhodium atoms is not less than 31% and not more than 60%.

## Description

### [Technical Field]

Embodiments of the invention relate generally to an electrolyzed water production device.

### [Background Art]

Technology is discussed in Patent Literature 1 in which the propagation of bacteria is suppressed by electrolyzing water including chloride ions inside an electrolytic cell and by spraying, toward a toilet, sterilizing water including hypochlorous acid produced by the electrolysis.

Such electrolysis uses mainly service water. Therefore, scale that has major components of sodium, calcium, potassium, magnesium, etc., that are included in the service water adheres to the negative electrode surface. When the amount of the scale adhering to the electrode becomes high, there is a possibility that the electrolytic performance may degrade; and the sterilizing water production capability may decrease.

Therefore, to suppress the adhesion of the scale, the scale that is adhered to the negative electrode is removed by performing a "pole change" of regularly switching the polarities of the negative electrode and the positive electrode. However, it is known that although the adhesion of the scale to the electrodes can be suppressed by performing the pole change, the life of the electrodes becomes short. Therefore, technology for extending the life of the electrodes and improving the production capability of the sterilizing water even in the case where the pole change is performed is discussed in Patent Literature 2.

### [Prior Art Documents]

### [Patent Literature]

[Patent Literature 1]
   Japanese Patent No. 5029930
[Patent Literature 2]
   Japanese Patent No. 5646677

### [Summary of Invention]

### [Problem to be Solved by the Invention]

However, an even longer life of the electrolyzed water production device is desirable. To extend the life of the electrodes, there is also a method of forming thick catalyst layers on the electrodes provided inside the electrolytic cell, and a method of enlarging the electrodes; but in such cases, problems occur in that the electrolyzed water production device is enlarged and/or the cost is increased.

The invention is carried out based on recognition of such problems and is directed to provide an electrolyzed water production device that can further extend the life of the electrodes while suppressing the enlargement and/or the increase of the cost.

### [Means for Solving the Problem]

A first invention is an electrolyzed water production device producing electrolyzed water including hypochlorous acid by electrolyzing water including chloride ions; the electrolyzed water production device includes an electrolytic cell through which the water passes, and an electrode provided inside the electrolytic cell; the electrode includes a catalyst layer including iridium oxide, tantalum oxide, and rhodium oxide; and in the catalyst layer, a proportion of a number of rhodium atoms included in the rhodium oxide to a sum of a number of iridium atoms included in the iridium oxide, a number of tantalum atoms included in the tantalum oxide, and the number of rhodium atoms is not less than 31% and not more than 60%.

According to the electrolyzed water production device, the durability life can be extended while suppressing the enlargement and/or the increase of the cost.

A second invention is the electrolyzed water production device of the first invention, wherein a ratio of the number of tantalum atoms to the number of iridium atoms is not less than 0.3 and not more than 1.8.

According to the electrolyzed water production device, the durability life can be extended further.

A third invention is the electrolyzed water production device of the first invention, wherein a ratio of the number of tantalum atoms to the number of iridium atoms is not less than 0.4 and not more than 1.1.

According to the electrolyzed water production device, the durability life can be extended further.

### [Effects of the Invention]

According to an embodiment of the invention, an electrolyzed water production device can be provided in which the life of the electrode can be extended further.

### [Brief Description of Drawings]

[FIG. 1] FIG. 1 is a perspective view of a toilet device including an electrolyzed water production device according to an embodiment.
[FIG. 2] FIG. 2 is a block diagram illustrating relevant components of a water channel system including the electrolyzed water production device according to the embodiment.
[FIG. 3] FIG. 3A and FIG. 3B show cross-sectional views illustrating the electrolyzed water production device according to the embodiment.
[FIG. 4] FIG. 4 is a cross-sectional view illustrating the configuration of the electrode included in the electrolyzed water production device according to the embodiment.
[FIG. 5] FIG. 5 illustrates the change of the durability life when changing the content ratio of rhodium in the catalyst layer.
[FIG. 6] FIG. 6 illustrates the change of the durability life when changing the content ratio of rhodium in the catalyst layer.
[FIG. 7] FIG. 7 illustrates the change of the durability life when changing the content ratio of tantalum in the catalyst layer.
[FIG. 8] FIG. 8 is a graph illustrating the change of the durability life when the Ta/Ir ratio in the catalyst layer of the electrode is changed.
[FIG. 9] FIG. 9A and FIG. 9B show graphs illustrating the results of a composition analysis of the electrode.

### [Modes for Carrying Out the Invention]

Embodiments of the invention will now be illustrated with reference to the drawings. Similar components in the drawings are marked with the same reference numerals; and a detailed description is omitted as appropriate.

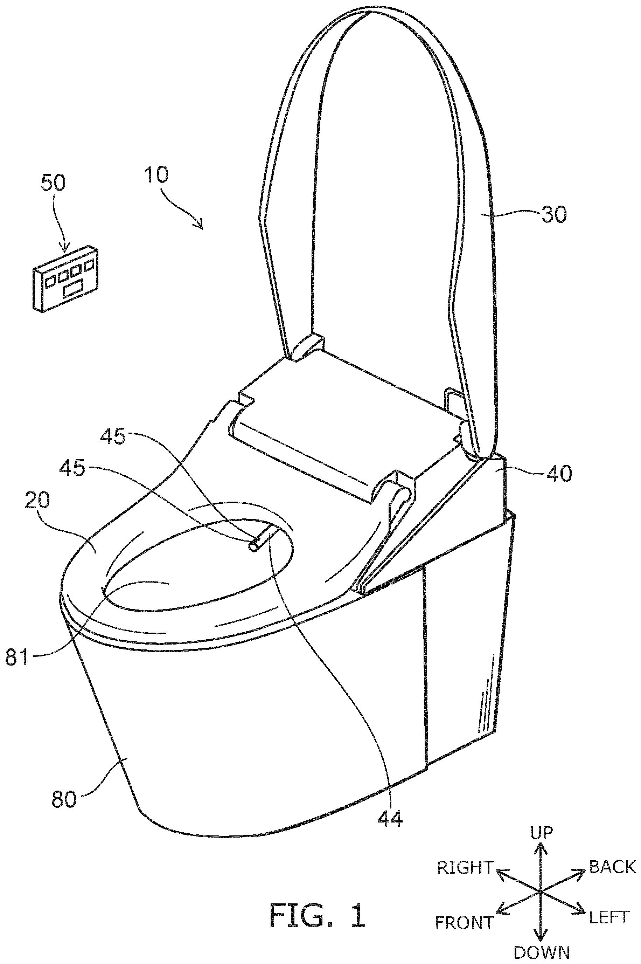

FIG. 1 is a perspective view of a toilet device including an electrolyzed water production device according to the embodiment.

The toilet device illustrated in FIG. 1 includes a western-style sit-down toilet (for convenience of description hereinbelow, called simply the "toilet") 80 and a sanitary washing device 10 provided on the toilet 80. The sanitary washing device 10 includes a casing 40, a toilet seat 20, and a toilet lid 30. The toilet seat 20 and the toilet lid 30 each are pivotally supported openably and closeably with respect to the casing 40.

A body wash function part that realizes the washing of a "bottom" or the like of a user sitting on the toilet seat 20 is built into the interior of the casing 40. Also, a human body detection sensor that detects the user approaching and moving away from the toilet device, a seat contact detection sensor that detects the user sitting on the toilet seat 20, etc., are provided as appropriate in the interior of the casing 40.

For example, by operating a remote control 50, the user can cause a washing nozzle 44 to advance into a bowl 81 of the toilet 80 and cause the washing nozzle 44 to retract into the interior of the casing 40. In the sanitary washing device 10 illustrated in FIG. 1, the washing nozzle 44 is illustrated in the state of being advanced into the bowl 81.

Multiple water discharge ports (spout holes) 45 are provided in the tip part of the washing nozzle 44. The washing nozzle 44 can wash the "bottom" or the like of the user sitting on the toilet seat 20 by squirting water from the water discharge ports 45 provided in the tip part of the washing nozzle 44.

In this specification, upward when viewed by the user sitting on the toilet seat 20 is taken as "upward;" and downward when viewed by the user sitting on the toilet seat 20 is taken as "downward." Also, frontward when viewed by the user sitting on the toilet seat 20 is taken as "frontward;" and backward when viewed by the user sitting on the toilet seat 20 is taken as "backward." The right side when viewed by the user sitting on the toilet seat 20 is taken as "rightward;" and the left side when viewed by the user sitting on the toilet seat 20 is taken as "leftward."

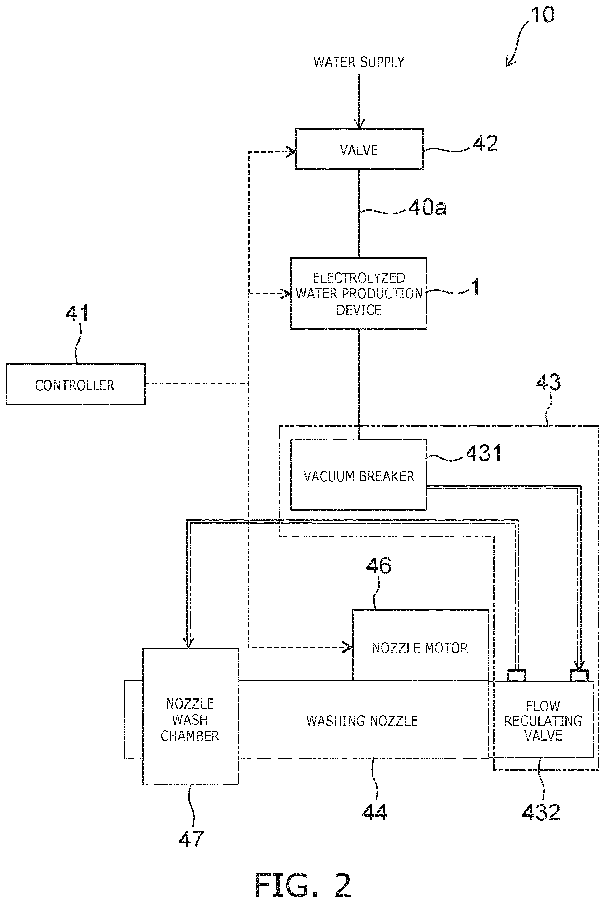

FIG. 2 is a block diagram illustrating relevant components of a water channel system including the electrolyzed water production device according to the embodiment.

The sanitary washing device 10 includes a flow channel (a pipe) 40a guiding the service water supplied from a water supply source such as a service water line, a water storage tank, etc., to the water discharge ports 45 of the washing nozzle 44. A valve 42 such as a solenoid valve or the like is provided upstream of the flow channel 40a. The valve 42 controls the supply of the service water to the flow channel 40a based on a command from a controller 41 provided in the interior of the casing 40.

The electrolyzed water production device 1 according to the embodiment is provided downstream of the valve 42. A safety valve, a pressure adjustment valve adjusting the pressure of the water flowing through the flow channel 40a, a pump changing the flow velocity of the water, a heat exchanger heating the water, etc., may be provided as appropriate between the valve 42 and the electrolyzed water production device 1.

The electrolyzed water production device 1 includes a pair of electrodes in the interior of the electrolyzed water production device 1 and electrolyzes the service water flowing through the interior by controlling a current provided from the controller 41. Because the service water includes chloride ions, hypochlorous acid is produced by electrolyzing the chloride ions. As a result, the water (the electrolyzed water) that is electrolyzed in the electrolyzed water production device 1 changes into a liquid including hypochlorous acid.

The hypochlorous acid functions as a sterilizing component. The electrolyzed water that includes the hypochlorous acid is squirted from the water discharge ports 45 of the washing nozzle 44 or is squirted toward the outer perimeter surface (the central body) and/or the water discharge ports 45 of the washing nozzle 44. Thereby, the flow channels downstream of the electrolyzed water production device 1 and/or the outer perimeter surface and the water discharge ports 45 of the washing nozzle 44 are sterilized by the electrolyzed water.

A flow channel switch valve 43 is provided downstream of the electrolyzed water production device 1. The flow channel switch valve 43 includes a vacuum breaker (a port open to the atmosphere) 431 and a flow regulating valve 432. The vacuum breaker 431 is disposed partway through the flow channel guiding the water or the electrolyzed water supplied from the electrolyzed water production device 1 toward the water discharge ports 45 of the washing nozzle 44 and prevents the backward flow of the water or the electrolyzed water. Or, the vacuum breaker 431 promotes water drainage inside the flow channel 40a by intaking air.

The flow regulating valve 432 is provided downstream (the side open to the atmosphere) of the vacuum breaker 431. The flow regulating valve 432 performs the opening and closing and/or the switching of the water supply to a flow channel guiding the washing water to the water discharge ports 45 for the bottom wash, a flow channel guiding the washing water to the water discharge port for the bidet wash, a flow channel guiding the washing water to a nozzle wash chamber 47, etc. That is, the flow regulating valve 432 includes multiple ports that can selectively communicate with the multiple water discharge ports 45.

The washing nozzle 44 is provided downstream of the flow regulating valve 432. The washing nozzle 44 receives a drive force from a nozzle motor 46 and can advance from the interior of the casing 40 into the bowl 81 of the toilet 80 and can retract toward the interior of the casing 40. That is, the nozzle motor 46 can cause the washing nozzle 44 to advance and retract based on a command from the controller 41. The flow regulating valve 432 moves according to the advance/retract operation of the washing nozzle 44. That is, the flow regulating valve 432 moves with the washing nozzle 44.

The nozzle wash chamber 47 is provided downstream of the flow regulating valve 432. The nozzle wash chamber 47 is fixed to the interior of the casing 40 and can wash the washing nozzle 44 in the standby state retracted into the interior of the casing 40. Or, the nozzle wash chamber 47 can wash the outer perimeter surface of the washing nozzle 44 in the advance/retract operation. Specifically, the nozzle wash chamber 47 can sterilize or wash the outer perimeter surface of the washing nozzle 44 by squirting electrolyzed water or water from a not-illustrated discharger provided in the interior of the nozzle wash chamber 47.

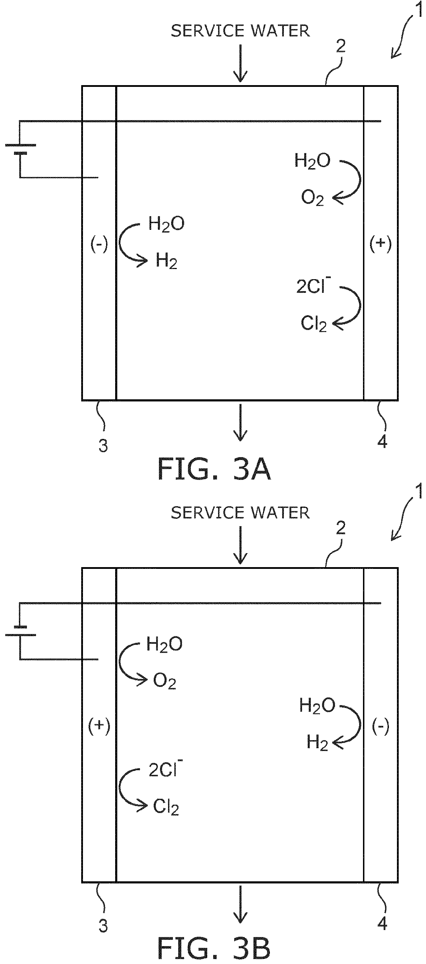

FIG. 3A and FIG. 3B show cross-sectional views illustrating the electrolyzed water production device according to the embodiment.

As illustrated in FIG. 3, the electrolyzed water production device 1 includes an electrolytic cell 2 and the pair of electrodes 3 and 4. The electrodes 3 and 4 are provided in the interior of the electrolytic cell 2 and are connected to a power supply. The service water that passes through the interior of the electrolytic cell 2 is electrolyzed by applying a voltage to the electrodes 3 and 4. FIG. 3A illustrates a state in which a voltage is applied so that the electrode 3 is negative and the electrode 4 is positive; and FIG. 3B illustrates a state in which a voltage is applied so that the electrode 3 is positive and the electrode 4 is negative.

As illustrated in FIG. 3A, chlorine is produced from the chloride ions at the electrode 4 on the positive side when the service water is electrolyzed. Then, the produced chlorine dissolves in the water; and hypochlorous acid is produced. At this time, at the electrode 3 on the negative side, scale is produced from ions of the calcium or the like included inside the service water and adheres to the surface of the electrode 3. Therefore, at the prescribed timing, the controller 41 reverses the polarity of the voltage applied to the electrodes 3 and 4 by performing a pole change from the state illustrated in FIG. 3A to the state illustrated in FIG. 3B.

By performing the pole change, the electrode 3 functioning as the negative electrode becomes the positive electrode; and the electrode 4 functioning as the positive electrode becomes the negative electrode. The scale that is adhered to the electrode 3 can be detached because acid is produced at the electrode 3 where the scale is adhered, and the scale is dissolved by the acid.

For example, the controller 41 measures the cumulative time the electrolysis is performed by the electrolyzed water production device 1 after the directly-previous pole change. Also, the cumulative time at which the pole change is to be performed is preset in the controller 41. When the cumulative time the electrolysis is performed reaches the preset cumulative time, the controller 41 performs the pole change by controlling the power supply. For example, in the case where the voltage applied between the electrodes 3 and 4 is 5 V, the pole change is performed every 60 seconds.

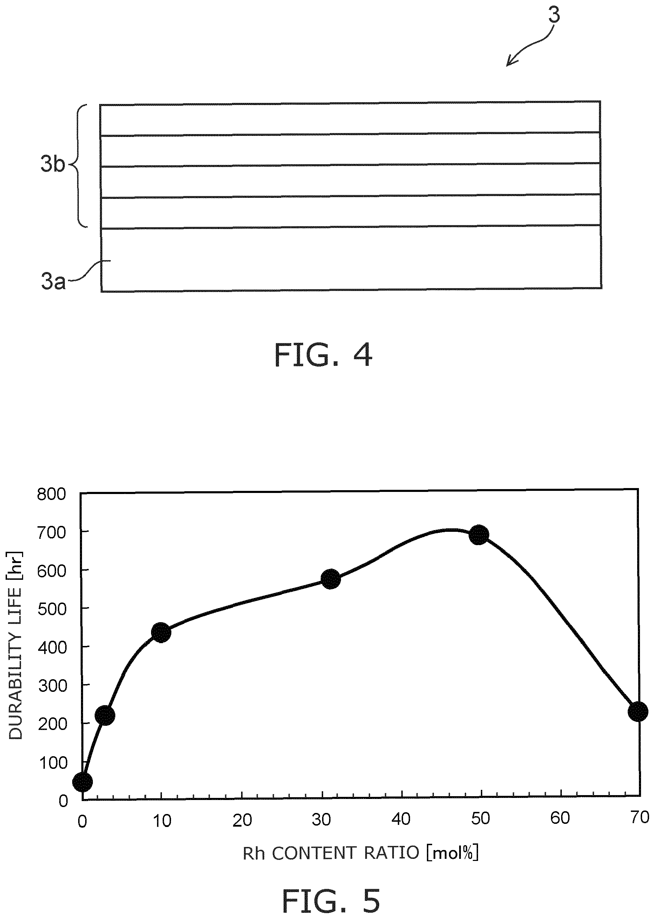

FIG. 4 is a cross-sectional view illustrating the configuration of the electrode included in the electrolyzed water production device according to the embodiment.

As illustrated in FIG. 4, the electrode 3 includes a base body 3a, and a catalyst layer 3b provided on the base body 3a. Although the configuration of the electrode 3 is illustrated in FIG. 4, the electrode 4 also has a similar configuration.

For example, the base body 3a includes titanium or a titanium-based alloy. An alloy that is corrosion-resistant and conductive and has titanium as a major body is used as the titanium-based alloy. For example, Ti-Ta-Nb, Ti-Pd, Ti-Zr, Ti-AI, etc., can be used.

The catalyst layer 3b includes iridium oxide, tantalum oxide, and rhodium oxide. For example, as illustrated in FIG. 4, the catalyst layer 3b includes multiple layers; and each layer includes iridium oxide, tantalum oxide, and rhodium oxide. Another intermediate layer also may be provided between the base body 3a and the catalyst layer 3b.

It is considered that iridium oxide acts as a catalyst when producing chlorine and promotes the production of chlorine. On the other hand, it is considered that rhodium oxide acts as a catalyst when producing hydrogen and promotes the production of hydrogen. Tantalum oxide supports the iridium oxide and the rhodium oxide.

For example, the electrodes 3 and 4 are manufactured by the following method.

First, the base body 3a is prepared; and the surface of the base body 3a is surface-roughened using blasting, etc. The surface of the base body may be further oxidized by baking the base body 3a after processing in ambient air.

Subsequently, for example, a solution in which an iridium compound, a tantalum compound, and a rhodium compound are dissolved is coated onto the surface of the base body 3a. Then, by baking the base body 3a on which the solution is coated, the iridium compound, the tantalum compound, and the rhodium compound are converted respectively into iridium oxide, tantalum oxide, and rhodium oxide; and the catalyst layer 3b is formed. The coating and the baking may be performed repeatedly in the case where the desired thickness of the catalyst layer 3b is not obtained by coating and baking one time.

When the production of the electrolyzed water is performed repeatedly using the electrodes 3 and 4, the concentration of the produced hypochlorous acid decreases as time elapses; and eventually, hypochlorous acid undesirably is not produced. It is considered that this is because the iridium oxide included in the catalyst layer 3b desorbs from the catalyst layer 3b, and the catalyst layer 3b detaches from the base body 3a.

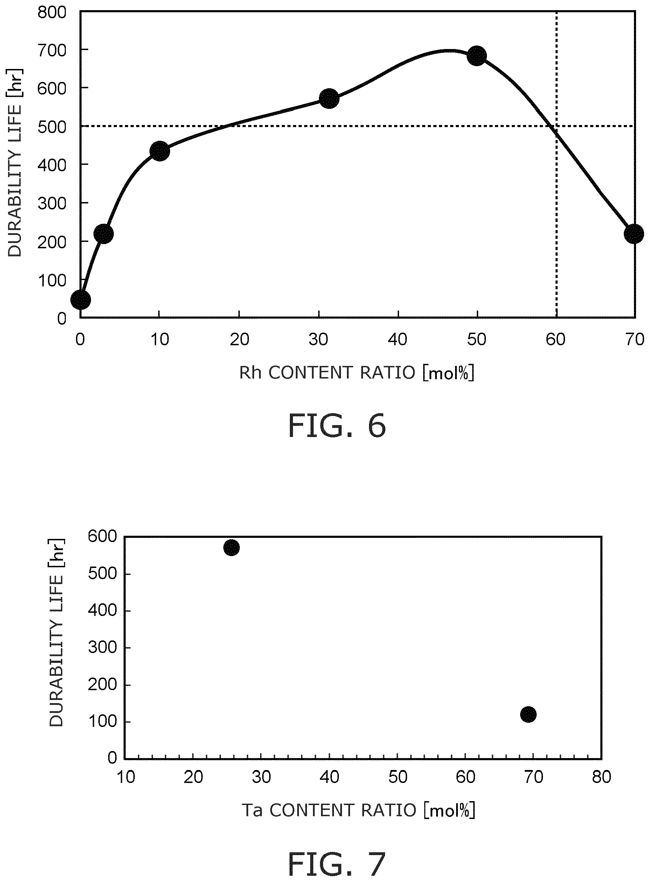

The inventor of the application verified the cumulative time (the durability life) that the electrolyzed water production device 1 can produce hypochlorous acid while changing the proportion of the rhodium oxide included in the catalyst layer 3b. Table 1, FIG. 5, and FIG. 6 illustrate the change of the durability life when changing the content ratio of rhodium in the catalyst layer 3b.

**[Table 1]**

| | | | | | | |
|---|---|---|---|---|---|---|
| Ir CONTENT RATIO [mol%] | 62.5 | 60.6 | 56.3 | 42.8 | 31.3 | 18.8 |
| Ta CONTENT RATIO [mol%] | 37.5 | 36.4 | 33.7 | 25.7 | 18.7 | 11.2 |
| Rh CONTENT RATIO [mol% ] | 0 | 3 | 10 | 31.5 | 50 | 70 |
| DURABILITY LIFE [hr] | 48 | 220 | 434 | 571 | 682 | 219 |

Table 1 illustrates the content ratios (mol%) of the metallic elements of iridium (Ir), tantalum (Ta), and rhodium (Rh) included in the catalyst layer 3b, and the durability life for each. In FIG. 5 and FIG. 6, the horizontal axis is the content ratio of rhodium; and the vertical axis is the durability life. Also, FIG. 6 is a figure in which a dotted line of the horizontal axis and a dotted line of the vertical axis are further added to FIG. 5. In FIG. 6, the dotted line of the horizontal axis is a line showing a durability life of 500 hr; and the dotted line of the vertical axis is a line showing a Rh content ratio of 60 mol%.

In the experiment, the thickness of each catalyst layer 3b was set to 3.6 µm. Also, for tantalum and iridium other than rhodium, the ratio of the content ratio of tantalum to the content ratio of iridium was set to 0.6.

The content ratio of each metallic element means the proportion of the number of the metallic element atoms to the sum of the number of iridium atoms included in the iridium oxide, the number of tantalum atoms included in the tantalum oxide, and the number of rhodium atoms included in the rhodium oxide.

From the experiment, the inventor of the application discovered the following.

The durability life is markedly short in the case where rhodium is not included. Compared to the case where rhodium is not included, the durability life was longer in the case where the content ratio of rhodium was 3 mol% or 10 mol%. Also, the durability life was even longer when the content ratio of rhodium was 31 mol% or more. On the other hand, the durability life became short when the content ratio of rhodium exceeded 50 mol% and became 70 mol%.

Also, the general durability life of a product is 10 years. In the case where the sanitary washing device 10 is used for 10 years, on average, the electrodes 3 and 4 cumulatively conduct for 500 hr. When the content ratio of rhodium exceeded 60 mol% and became 70 mol%, the durability life became shorter than the conduction time of 500 hr which is a durability life of 10 years.

In other words, the inventor of the application discovered that a favorably long durability life that is not less than the conduction time of 500 hr which is a durability life of 10 years is obtained when the content ratio of rhodium is in the range not less than 31 mol% and not more than 60 mol%, which is not included in the content ratio of rhodium described in Patent Literature 2. In particular, it was discovered that the longest durability life is obtained when the content ratio of rhodium is 50 mol%. In other words, in the catalyst layer, it is favorable for the proportion of the number of rhodium atoms included in the rhodium oxide to the sum of the number of iridium atoms included in the iridium oxide, the number of tantalum atoms included in the tantalum oxide, and the number of rhodium atoms to be not less than 31% and not more than 60%. In particular, it is more favorable for the proportion to be 50% or less.

As described above, it is considered that rhodium oxide functions as a catalyst when producing hydrogen from water. In other words, rhodium oxide does not directly contribute to the production of chlorine. Therefore, conventionally, as described in Patent Literature 2, the content ratio of rhodium oxide in the catalyst layer is set to be 30 mol% or less which is lower than the content ratio of iridium, etc. However, from the results of the experiments, the inventor of the application discovered that the durability life can be improved by setting the content ratio of rhodium oxide to be 31 mol% or more which is higher than the conventional content ratio.

Tables 2 and FIG. 7 illustrate the change of the durability life when the content ratio of rhodium in the catalyst layer 3b is substantially constant, and the content ratios of iridium and tantalum are changed. In the experiment, the thickness of each catalyst layer 3b was set to 3.6 µm.

**[Table 2]**

| | | |
|---|---|---|
| Ir CONTENT RATIO [mol%] | 0 | 42.8 |
| Ta CONTENT RATIO [mol%] | 69.3 | 25.7 |
| Rh CONTENT RATIO [mol%] | 30.7 | 31.5 |
| DURABILITY LIFE [ hr ] | 120 | 571 |

From the results illustrated in Tables 2 and FIG. 7, it can be seen that the durability life is reduced greatly in the case where the content ratio of iridium is 0 mol%. On the other hand, for tantalum as well, it is considered that when the proportion of tantalum oxide in the catalyst layer 3b is low, the iridium oxide and the rhodium oxide cannot be supported sufficiently; these components desorb easily; and the durability life becomes short. Accordingly, it is desirable for the catalyst layer 3b to include at least iridium oxide, tantalum oxide, and rhodium oxide.

Similarly to Tables 2 and FIG. 7, Table 3 illustrates the change of the durability life when the content ratio of rhodium in the catalyst layer 3b is substantially constant, and the experimental conditions are modified further.

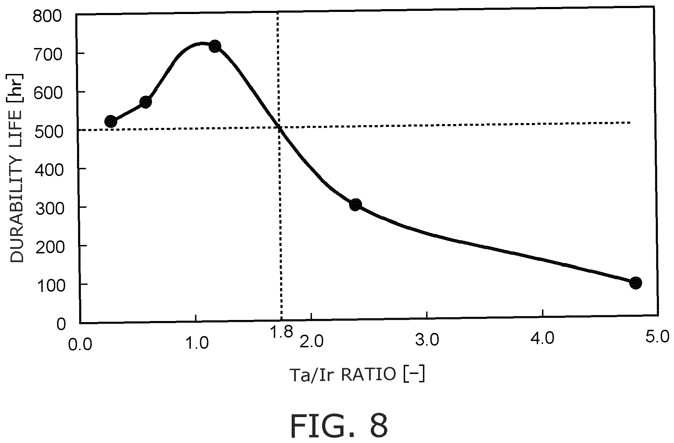

FIG. 8 is a graph illustrating the change of the durability life when the Ta/Ir ratio in the catalyst layer of the electrode is changed. In the experiment, the thickness of each catalyst layer 3b was set to 3.6 µm.

**[Table 3]**

| | | | | | |
|---|---|---|---|---|---|
| Ir CONTENT RATIO [mol%] | 11.8 | 20.1 | 31. 1 | 42.8 | 52.7 |
| Ta CONTENT RATIO[mol%] | 56.7 | 48.4 | 37.4 | 25.7 | 15.8 |
| Rh CONTENT RATIO[mol%] | 31.5 | 31.5 | 31.5 | 31.5 | 31.5 |
| Ta/Ir RATIO[-] | 4.8 | 2.4 | 1.2 | 0.6 | 0.3 |
| DURABILITY LIFE [hr] | 87 | 297 | 714 | 571 | 522 |

From the results illustrated in Tables 3 and FIG. 8, it can be seen that a favorably long durability life that is not less than the conduction time of 500 hr which is a durability life of 10 years which is the general durability life of a product is obtained when the Ta/Ir ratio is 0.3 or more. Also, it can be seen that the durability life is short when the Ta/Ir ratio is 1.1 or more as well. Further, it can be seen that when the Ta/Ir ratio becomes greater than 1.8, the durability life is short and is not more than the conduction time of 500 hr which is a durability life of 10 years.

In other words, in the catalyst layer 3b, it is desirable for the proportion of the number of tantalum atoms included in the tantalum oxide to the number of iridium atoms included in the iridium oxide to be not less than 0.3 and not more than 1.8; further, in the catalyst layer 3b, it is more desirable for the proportion of the number of tantalum atoms included in the tantalum oxide to the number of iridium atoms included in the iridium oxide to be not less than 0.4 and not more than 1.1.

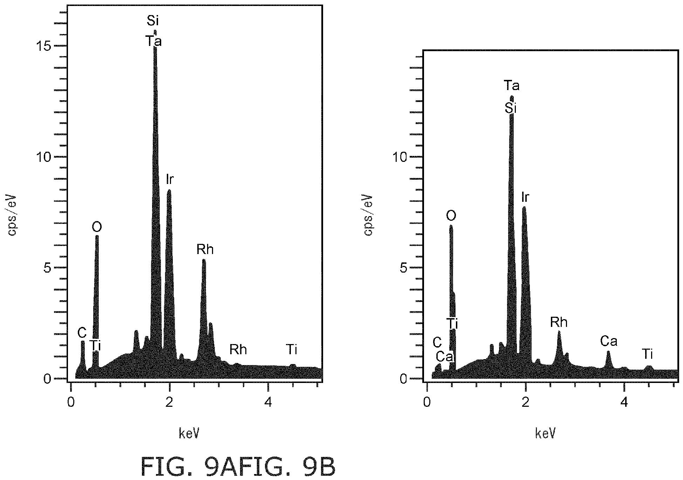

FIG. 9A and FIG. 9B show graphs illustrating the results of a composition analysis of the electrode.

FIG. 9A illustrates the result before the electrolyzed water production device 1 is used; and FIG. 9B illustrates the result after electrolysis is performed by the electrolyzed water production device 1 for 730 hours. The composition analysis is performed by energy dispersive X-ray spectrometry (SEM-EDX) using an electrode including a catalyst layer having a content ratio of rhodium of 31 mol%.

From the comparison of FIG. 9A and FIG. 9B, it can be seen that the peak intensity of iridium (Ir) substantially does not decrease even after the electrolyzed water production device 1 is used. In other words, according to the electrolyzed water production device 1 according to the embodiment, it can be seen that the desorption of the iridium from the catalyst layer and the separating from the base body of the catalyst layer as the electrolyzed water is produced can be suppressed.

As described above, according to the embodiment, the durability life of the electrode can be extended without enlarging or increasing the film thickness of the catalyst layer. In other words, according to the embodiment, the durability life of the electrolyzed water production device can be extended while suppressing the enlargement and/or the increase of the cost of the electrolyzed water production device. For example, by using the electrolyzed water production device 1 having a long durability life in a toilet device, the decrease of the concentration of the hypochlorous acid as the electrolyzed water is produced can be suppressed; and the decrease of the sterilization effect can be suppressed. Also, the replacement interval of the electrolyzed water production device 1 can be longer; and the toilet device can be used continuously for a longer period of time.

Herein, the case is described where the electrolyzed water production device 1 is applied to a toilet device. However, the electrolyzed water production device 1 according to the embodiment also is applicable to devices other than a toilet device. For example, the propagation of bacteria can be suppressed at locations such as the bowl surface of a urinal, the bathroom floor of a bathroom, the bowl surface of a hand wash basin, etc., by dispersing the electrolyzed water produced by the electrolyzed water production device 1.

Embodiments of the invention are described hereinabove. However, the invention is not limited to these descriptions. Appropriate design modifications made by one skilled in the art for the embodiments described above also are within the scope of the invention to the extent that the features of the invention are included. For example, the configurations, the dimensions, the materials, the arrangements, etc., of the electrolyzed water production device are not limited to those illustrated and can be modified appropriately.

Also, the components included in the embodiments described above can be combined within the limits of technical feasibility; and such combinations also are within the scope of the invention to the extent that the features of the invention are included.

### [Reference Numeral List]

- 1: electrolyzed water production device
- 2: electrolytic cell
- 3, 4: electrodes
- 3a: base body
- 3b: catalyst layer
- 10: sanitary washing device
- 20: toilet seat
- 30: toilet lid
- 40: casing
- 40a: flow channel
- 41: controller
- 42: valve
- 43: flow channel switch valve
- 431: vacuum breaker
- 432: flow regulating valve
- 44: washing nozzle
- 45: water discharge port
- 46: nozzle motor
- 47: nozzle wash chamber
- 50: remote control
- 80: toilet
- 81: bowl

## Claims

1. An electrolyzed water production device producing electrolyzed water including hypochlorous acid by electrolyzing water including chloride ions, the electrolyzed water production device comprising:
an electrolytic cell, the water passing through the electrolytic cell; and
an electrode provided inside the electrolytic cell,
the electrode including a catalyst layer, the catalyst layer including iridium oxide, tantalum oxide, and rhodium oxide,
in the catalyst layer, a proportion of a number of rhodium atoms included in the rhodium oxide to a sum of a number of iridium atoms included in the iridium oxide, a number of tantalum atoms included in the tantalum oxide, and the number of rhodium atoms being not less than 31% and not more than 60%.

2. The electrolyzed water production device according to claim 1, wherein a ratio of the number of tantalum atoms to the number of iridium atoms is not less than 0.3 and not more than 1.8.

3. The electrolyzed water production device according to claim 1 or 2, wherein a ratio of the number of tantalum atoms to the number of iridium atoms is not less than 0.4 and not more than 1.1.
